# DEMANDE DE BREVET EUROPEEN

(11) **EP 0 757 452 A1**
(43) Date de publication de la demande: **05.02.1997**
(21) Numéro de dépôt: 96202176.2
(22) Date de dépôt: 01.08.1996
(51) Int. Cl.: H04B 3/54

(54) **Système de télécommunication au travers de lignes d'alimentation d'énergie**

(30) Priorité: 02.08.1995 FR 9509419
(71) Demandeur: PHILIPS COMPOSANTS ET SEMICONDUCTEURS, 92150 Suresnes (FR); PHILIPS ELECTRONICS N.V., 5621 BA Eindhoven (NL)
(72) Inventeur: Paret, Dominique, 75008 Paris (FR)
(74) Mandataire: Charpail, François

(57) **Abrégé**

Système de télécommunication au travers de lignes d'alimentation d'énergie comportant des dispositifs dits de communication (1,2), chacun des dispositifs de communication comportant un micro-contrôleur (3,4) et un modulateur/démodulateur appelé modem (5,6), ledit modem étant muni d'une part d'un module dit d'interface (7,8) faisant la liaison entre le modem et les lignes d'alimentation d'énergie où circulent des informations, modem muni d'autre part d'un module de transmission (9,10) comportant un modulateur numérique (13,14) suivi d'un convertisseur numérique/analogique (15,16), modem muni enfin d'un module de réception (11,12).

Le module de réception présent dans chacun des modems contenus dans chacun des dispositifs de communication comporte un filtre numérique (19,20) disposé entre un convertisseur analogique/numérique (17,18) et un démodulateur numérique (21,22), ledit filtre numérique étant doté de moyens lui permettant de s'adapter à la fréquence de signaux présents sur les lignes d'alimentation d'énergie, ce qui permet au modem d'opérer à toute fréquence dans la gamme autorisée allant de 60 à 140 KHz.

## Description

La présente invention concerne un système de télécommunication au travers de lignes d'alimentation d'énergie comportant des dispositifs dits de communication, chacun des dispositifs de communication comportant un micro-contrôleur et un modulateur/démodulateur appelé modem, le dit modem étant muni d'une part d'un module dit d'interface faisant la liaison avec les lignes d'alimentation d'énergie où circulent des informations, modem muni d'autre part d'un module de transmission comportant un modulateur numérique suivi d'un convertisseur numérique/analogique dont la sortie est connectée au module d'interface, modem muni enfin d'un module de réception comportant un convertisseur analogique/numérique dont l'entrée est connectée au module d'interface, suivi d'un démodulateur numérique.

Un modem contenu dans un tel dispositif est connu du brevet US n°4 510 611. Un modem connu, utilisé pour transmettre et recevoir des données dans les lignes d'alimentation d'énergie comporte un module d'interface, un module de transmission et un module de réception. Le module de transmission d'un tel dispositif réalise la modulation numérique du signal à transmettre selon le mode ASK (Amplitude Shift Keying), qui consiste à transmettre un signal porteur fixé à une fréquence nominale lorsque le signal à moduler est à 1, et à arrêter la transmission lorsque le signal à moduler est à 0. La gamme des fréquences autorisées pour ce type de transmission va de 60 à 140 KHz. Le module de réception d'un tel dispositif comporte un auto-corrélateur qui contrôle l'intégrité du signal reçu. Celui-ci peut avoir été brouillé, soit par la présence d'autres informations émises sur la ligne, soit encore par la mise en route d'appareils de forte puissance, comme par exemple une machine à laver, qui provoque une brusque variation du courant dans les lignes d'alimentation d'énergie. Si l'intégrité du signal est mise en doute par l'auto-corrélateur, une information est envoyée à un micro-contrôleur qui pilote le modem, lequel micro-contrôleur a pour mission d'envoyer un signal au travers du module de transmission du modem vers le dispositif qui a initialement émis le signal à l'intégrité douteuse, afin de demander une ré-émission, et ce jusqu'à ce que le signal parvienne intact au modem. Cette procédure manque de souplesse et peut provoquer des délais importants dans les communications, surtout dans le cas où les phénomènes parasites ou polluants en termes de bruit électro-magnétique sont durables et/ou fréquents.

La présente invention a pour but de remédier à cet inconvénient, en proposant un système de télécommunication au travers de lignes d'alimentation d'énergie moins sensible aux phénomènes parasites et capable, lorsqu'une fréquence de communication est par trop polluée, de s'adapter à une autre fréquence plus adéquate.

En effet, selon la présente invention, un système de télécommunication au travers de lignes d'alimentation d'énergie du type défini dans le paragraphe introductif est caractérisé en ce que le module de réception présent dans le modem contenu dans chacun des dispositifs de communication comporte en outre un filtre numérique disposé entre le convertisseur analogique/numérique et le démodulateur numérique, ledit filtre numérique étant doté de moyens lui permettant de s'adapter à la fréquence de signaux présents sur les lignes d'alimentation d'énergie.

Le filtre numérique permet d'éliminer, dans une large mesure, les signaux parasites qui pourraient altérer le signal reçu, rendant ainsi le modem de chacun des dispositifs de communication moins sensible au bruit électro-magnétique. D'autre part, le filtre numérique conserve ses propriétés si l'on change la fréquence de communication. Le système de télécommunication n'est donc plus contraint d'opérer à une fréquence nominale fixée et est capable de quitter une fréquence de communication polluée pour se repositionner sur une autre fréquence plus adéquate.

Dans un mode de réalisation particulièrement avantageux de l'invention, un système de télécommunication tel que décrit ci-dessus est caractérisé en ce que, au sein du modem contenu dans chacun des dispositifs de communication, le filtre numérique, ainsi que le modulateur numérique, le convertisseur numérique/analogique et le convertisseur analogique/numérique sont tous cadencés par un même signal d'horloge commun.

Le signal d'horloge étant commun à toutes les parties du modem de chacun des dispositifs de communication qui ont besoin d'être cadencées, l'adaptation du filtre numérique à la fréquence du signal reçu se fait de manière parfaitement automatique.

Une variante de l'invention présente un système de télécommunication tel que décrit ci-dessus, caractérisé en ce que le modem contenu dans chacun des dispositifs de communication comporte une ROM dans laquelle est stocké sous forme échantillonnée un signal porteur servant à la modulation, ROM dont la lecture est cadencée par le signal d'horloge commun.

Le micro-contrôleur du dispositif de communication récepteur n'a plus alors besoin que de commander le signal d'horloge, l'adaptation de la fréquence du signal porteur à la nouvelle fréquence choisie étant réalisée automatiquement au sein même du modem qu'il pilote.

Une autre variante de l'invention présente un système de télécommunication, caractérisé en ce que le signal porteur stocké sous forme échantillonnée dans la ROM incluse dans le modem contenu dans chacun des dispositifs de communication a des valeurs soumises à deux régimes transitoires, le premier, en début d'émission, au cours duquel le signal porteur a une amplitude qui croît progressivement jusqu'à une valeur nominale fixée, le second, en fin d'émission, au cours duquel l'amplitude du signal porteur décroît progressivement jusqu'à zéro.

L'augmentation et la diminution progressive de l'amplitude lors des commutations génèrent moins de bruit sur les lignes d'alimentation d'énergie. Le système de télécommunication selon cette variante de l'invention est donc rendu moins polluant pour les autres informations qui pourraient être présentes sur les dites lignes.

Selon un mode de réalisation avantageux des variantes de l'invention décrites ci-dessus, un système de télécommunication conforme à l'invention est caractérisé en ce que le filtre numérique présent dans le modem contenu dans chacun des dispositifs de communication comporte une autre ROM dans laquelle différents jeux de coefficients correspondant à différents gabarits de filtrage sont stockés, ladite ROM étant adressée par le micro-contrôleur au moyen d'un bus de commande.

Cette variante de l'invention permet au système de télécommunication de s'adapter au type de parasites rencontrés. En effet, le bruit électro-magnétique dépendant en grande partie de l'environnement dans lequel est placé le système, il peut se présenter sous des formes diverses. Un filtre à jeux de coefficients multiples pré-programmés et sélectionnables assure un comportement optimal du filtre dans les différents cas de figure qui ont été prévus lors de l'étude de la configuration du filtre.

L'invention porte également sur un modulateur/démodulateur muni d'une part d'un module dit d'interface faisant la liaison entre le modulateur/démodulateur et des lignes d'alimentation d'énergie où circulent des informations, muni d'autre part d'un module de transmission comportant un modulateur numérique suivi d'un convertisseur numérique/analogique dont la sortie est connectée au module d'interface, et muni enfin d'un module de réception comportant un convertisseur analogique/numérique dont l'entrée est connectée au module d'interface, suivi d'un démodulateur numérique, caractérisé en ce que le module de réception comporte en outre un filtre numérique disposé entre le convertisseur analogique/numérique et le démodulateur numérique, ledit filtre numérique étant doté de moyens lui permettant de s'adapter à la fréquence de signaux présents sur les lignes d'alimentation d'énergie.

Dans un mode de réalisation particulièrement avantageux, un tel modulateur/démodulateur est caractérisé en ce que le filtre numérique, ainsi que le modulateur numérique, le convertisseur numérique/analogique et le convertisseur analogique/numérique sont tous cadencés par un même signal d'horloge commun.

Une variante d'un tel modulateur/démodulateur est caractérisée en ce qu'un signal porteur servant à la modulation est stocké sous forme échantillonnée dans une ROM dont la lecture est cadencée par le signal d'horloge commun.

Une autre variante d'un tel modulateur/démodulateur est caractérisée en ce que le signal porteur stocké sous forme échantillonnée dans la ROM a des valeurs soumises à deux régimes transitoires, le premier, en début d'émission, au cours duquel le signal porteur a une amplitude qui croît progressivement jusqu'à une valeur nominale fixée, le second, en fin d'émission, au cours duquel l'amplitude du signal porteur décroît progressivement jusqu'à zéro.

Enfin, une forme avantageuse d'un modulateur/démodulateur selon l'une des variantes décrites ci-dessus est caractérisée en ce que le filtre numérique qu'il contient comporte une autre ROM dans laquelle différents jeux de coefficients de coefficients correspondant à différents gabarits de filtrage sont stockés.

L'invention sera mieux comprise à l'aide de la description suivante de quelques modes de réalisation, faite à titre d'exemple et en regard des dessins annexés, dans lesquels :
- La figure 1 est un schéma fonctionnel décrivant un exemple de système de télécommunication au travers de lignes d'alimentation d'énergie selon l'invention,
- la figure 2 est un organigramme illustrant le comportement d'un micro-contrôleur pilotant un modem au sein d'un dispositif de communication,
- la figure 3 est un schéma fonctionnel décrivant un mode de réalisation avantageux d'un système de télécommunication au travers de lignes d'alimentation d'énergie selon l'invention,
- la figure 4 est un schéma fonctionnel décrivant un exemple de système de télécommunication au travers de lignes d'alimentation d'énergie selon une variante de l'invention,
- la figure 5 est un schéma fonctionnel décrivant un mode de réalisation avantageux d'un système de télécommunication au travers de lignes d'alimentation d'énergie selon une variante de l'invention, et
- la figure 6 est un ensemble de chronogrammes illustrant, dans deux cas correspondant à deux modes de réalisation de l'invention différents, l'évolution du signal de sortie d'un modem en fonction du signal à moduler fourni par le micro-contrôleur qui le pilote.

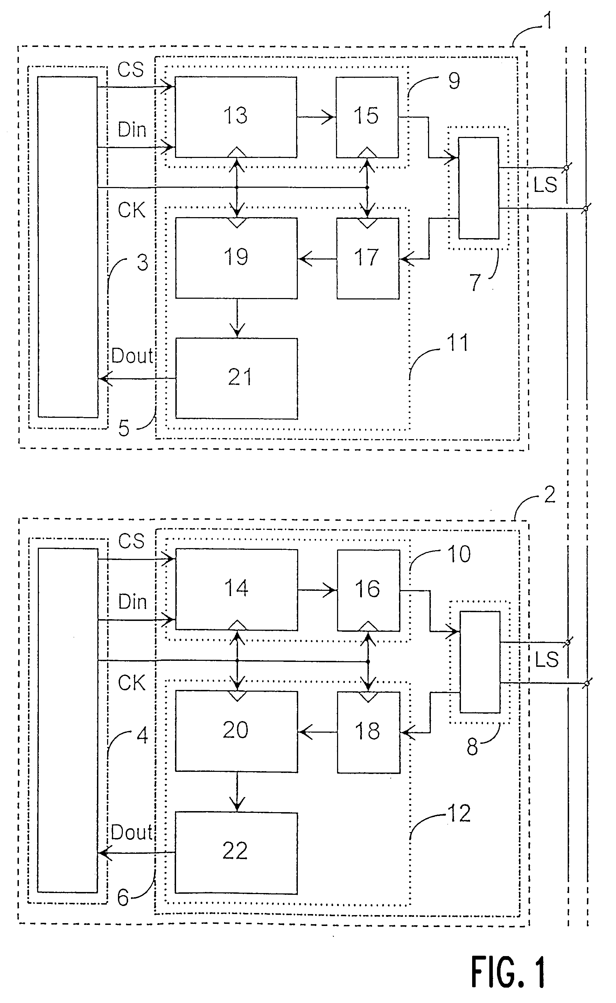

La figure 1 présente un schéma fonctionnel partiel d'un système de télécommunications au travers de lignes d'alimentation d'énergie selon l'invention. Un tel système de télécommunications comporte deux dispositifs dits de communication (1, 2), chacun d'entre eux comportant un micro-contrôleur (3, 4) et un modulateur/démodulateur appelé modem (5, 6), ledit modem étant muni d'une part d'un module dit d'interface (7, 8) faisant la liaison entre le modem et les lignes d'alimentation d'énergie où circulent des informations, modem muni d'autre part d'un module de transmission (9, 10) comportant un modulateur numérique (13, 14) suivi d'un convertisseur numérique/analogique (15, 16) dont la sortie est connectée à l'interface, modem muni enfin d'un module de réception (11, 12) comportant un convertisseur analogique/numérique (17, 18), dont l'entrée est connectée à l'interface, suivi d'un démodulateur numérique (21, 22). Le module de réception présent dans chaque modem contenu dans chacun des dispositifs de communication comporte en outre un filtre numérique (19, 20) disposé entre le convertisseur analogique/numérique (17, 18) et le démodulateur numérique (21, 22). Le filtre numérique, ainsi que le modulateur numérique, le convertisseur numérique/analogique et le convertisseur analogique/numérique sont ici tous cadencés par un même signal d'horloge commun CK.

Chaque modem (5, 6) est piloté par son micro-contrôleur associé (3, 4), lequel fournit un signal à moduler Din, un signal porteur échantillonné servant à la modulation numérique CS, et le signal d'horloge commun CK. Le micro-contrôleur reçoit du modem le signal Dout, signal numérique qui a été émis sous forme modulée par lui-même ou par l'autre dispositif de communication sur les lignes d'alimentation d'énergie, le signal analogique correspondant étant LS.

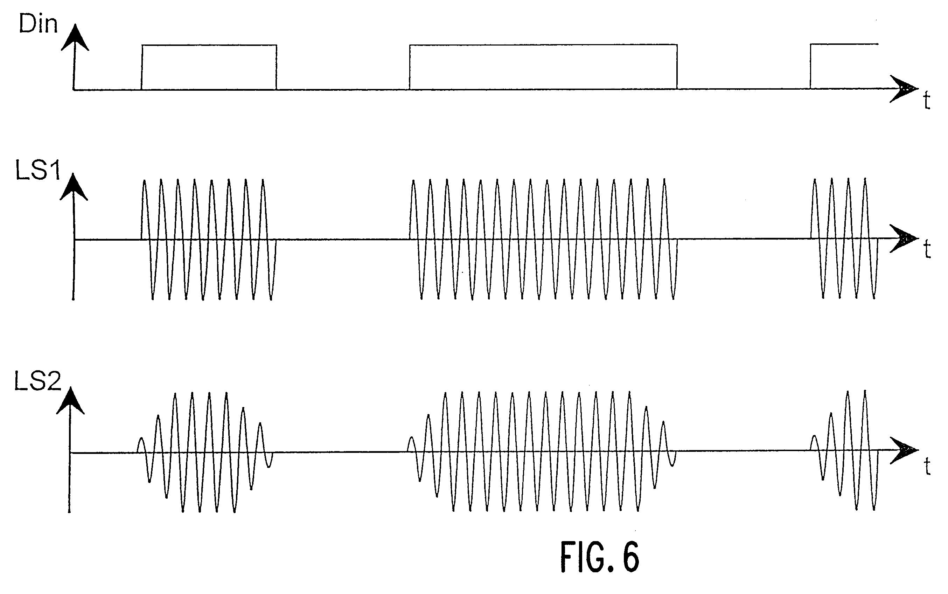

La transmission d'un signal par un dispositif de communication (1, 2) est réalisée de la manière suivante : le module de transmission (9, 10) réalise la modulation numérique du signal à transmettre Din fourni par le micro-contrôleur (3, 4) selon le mode ASK (Amplitude Shift Keying), qui consiste à transmettre un signal porteur fixé à une fréquence nominale lorsque le signal à moduler est à 1, et à arrêter la transmission lorsque le signal à moduler est à 0. La gamme des fréquences autorisées pour ce type de transmission va de 60 à 140 KHz. Le signal porteur CS est fourni par le micro-contrôleur (3, 4) au modulateur numérique (13, 14), dont le signal de sortie est converti en analogique par le convertisseur numérique/analogique (15, 16). Le signal de sortie de ce convertisseur est émis sur les lignes d'alimentation d'énergie via le module d'interface (7, 8). L'évolution du signal LS1, alors présent aux bornes de sortie du module d'interface (7, 8), en fonction du signal d'entrée à moduler Din peut être observée sur la figure 6, où le rapport entre les fréquences de ces deux signaux a été choisi de manière arbitraire afin de permettre une représentation offrant la meilleure compréhension possible.

La réception d'un signal présent sur les lignes d'alimentation d'énergie par un dispositif de communication (1, 2) est réalisée de la manière suivante : le signal reçu LS est transmis au convertisseur analogique/numérique (17, 18) contenu dans le module de réception (11, 12) via le module d'interface (7, 8). Le signal de sortie du convertisseur analogique/numérique (17, 18) est filtré dans le filtre numérique (19, 20), ce qui permet de le débarrasser dans une large mesure des signaux parasites qui auraient pu l'altérer. Le signal filtré est ensuite démodulé dans le démodulateur numérique (21, 22), dont la sortie Dout est transmise au micro-contrôleur (3, 4). Si celui-ci se révèle incapable d'exploiter le signal Dout, il peut provoquer un changement de la fréquence de communication en modifiant la fréquence du signal d'horloge commun CK ainsi que celle du signal porteur CS.

Le modem (5, 6) permet un contrôle de l'intégrité de la modulation. En effet, lorsqu'un dispositif de communication (1, 2) émet un signal LS, il lui est possible de le traiter simultanément comme un signal reçu, ainsi que décrit ci-dessus. Le micro-contrôleur (3, 4) effectue la comparaison entre les deux signaux Din et Dout, qui doivent en principe être identiques.

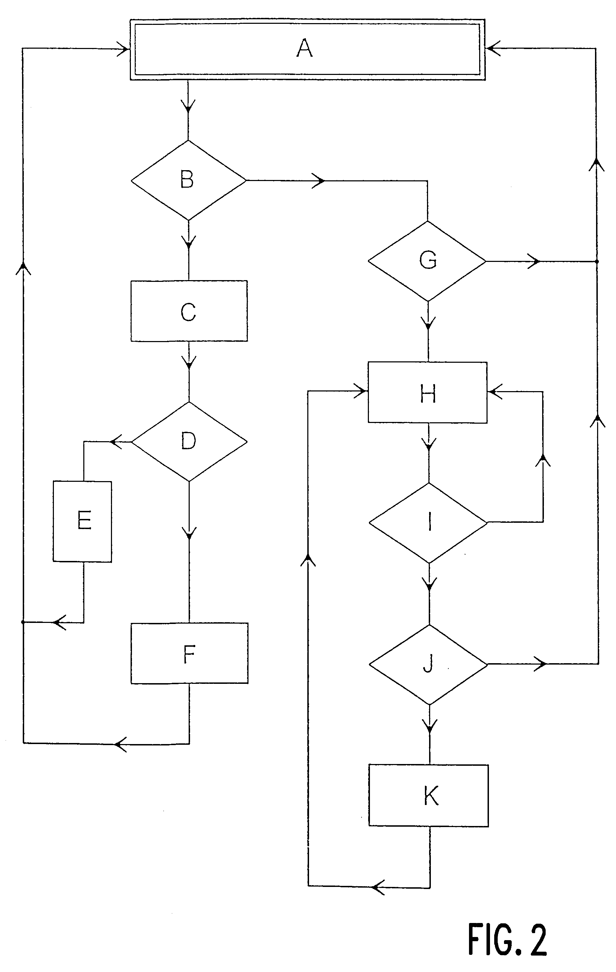

La figure 2 présente un organigramme illustrant un mode de fonctionnement possible d'un micro-contrôleur pilotant un modem au sein d'un dispositif de communication : l'étape A représente l'état initial du micro-contrôleur, au cours duquel il scrute constamment l'état des lignes d'alimentation d'énergie par le biais du modem qu'il pilote. Le test B a pour objet la détection d'un signal sur ces lignes. Si un signal est détecté, le micro-contrôleur passe à l'étape C, où il identifie la fréquence du signal détecté, puis commande au modem d'effectuer la conversion analogique/numérique, le filtrage numérique et la démodulation numérique du signal présent sur les lignes. L'étape D est un test d'intégrité du signal reçu. Si le signal est jugé inexploitable, le micro-contrôleur passe à l'étape E, où il émet sur les lignes un signal demandant la ré-émission du signal reçu sur un fréquence plus hospitalière, à la suite de quoi il revient à l'étape initiale A de scrutation des lignes. Si le signal est jugé exploitable à l'issue du test D, le micro-contrôleur passe à l'étape F, où il exploite effectivement le signal reçu, avant de retourner à l'étape initiale A de scrutation des lignes.

Si l'on ne détecte aucun signal sur les lignes d'alimentation d'énergie, l'émission d'un signal est possible. Le test G détermine si le micro-contrôleur a reçu un ordre d'émission. Si non, le micro-contrôleur revient à l'étape initiale de scrutation des lignes. Si oui, il se positionne à l'étape H, dans laquelle il commande au modem la modulation numérique du signal à émettre, la conversion numérique/analogique et l'émission du signal résultant. Le test I permet de vérifier l'intégrité du signal émis, en le traitant comme un signal reçu, comme indiqué dans la description de l'étape C. Si le signal émis est jugé non-valide, le micro-contrôleur se replace à l'étape H, afin de procéder à la ré-émission du signal à la même fréquence. Si le signal émis est valide, le micro-contrôleur réalise le test J, où il scrute les lignes afin de détecter une éventuelle demande de ré-émission sur une fréquence plus hospitalière. Si celle-ci est absente, le micro-contrôleur se replace à l'étape initiale A de scrutation des lignes. Si une demande de ré-émission à fréquence différente arrive, le micro-contrôleur se positionne à l'étape K, où il réalise le changement de fréquence dans le dispositif de communication, puis revient à l'étape H où il commande une ré-émission à la nouvelle fréquence. Le processus est reproduit jusqu'à ce que le micro-contrôleur ne reçoive plus de demande de changement de fréquence d'émission, ce qui lui permet alors de revenir à l'étape initiale A de scrutation des lignes.

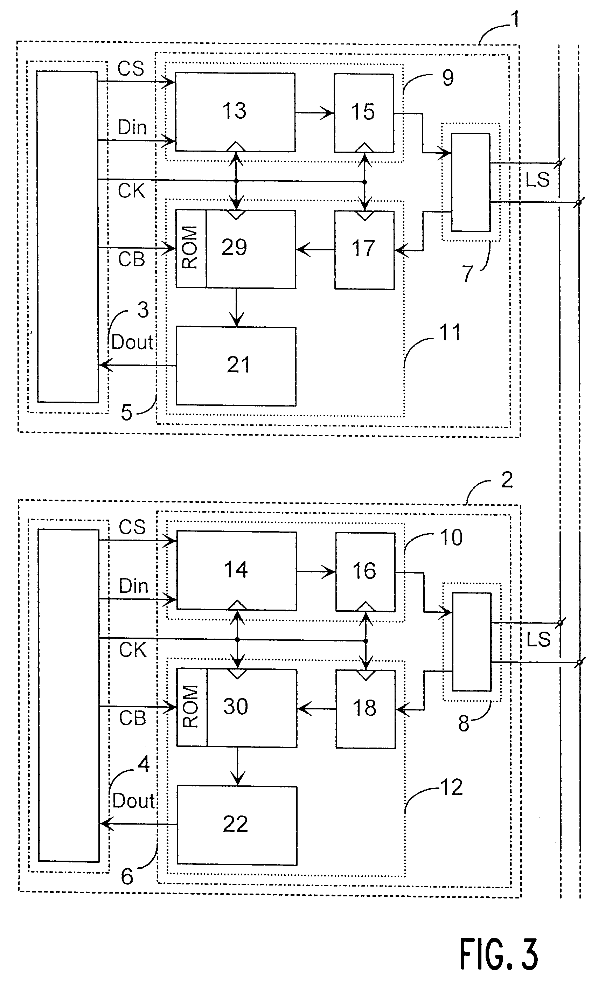

La figure 3 présente un schéma fonctionnel partiel d'un mode de réalisation avantageux d'un système de télécommunication selon l'invention, dans lequel le filtre numérique (29, 30) présent dans le modem (5, 6) contenu dans chacun des dispositifs de communication (1, 2) comporte une ROM dans laquelle différents jeux de coefficients correspondant à différents gabarits de filtrage sont stockés, ladite ROM étant adressée par le micro-contrôleur (3 , 4) au moyen d'un bus de commande CB.

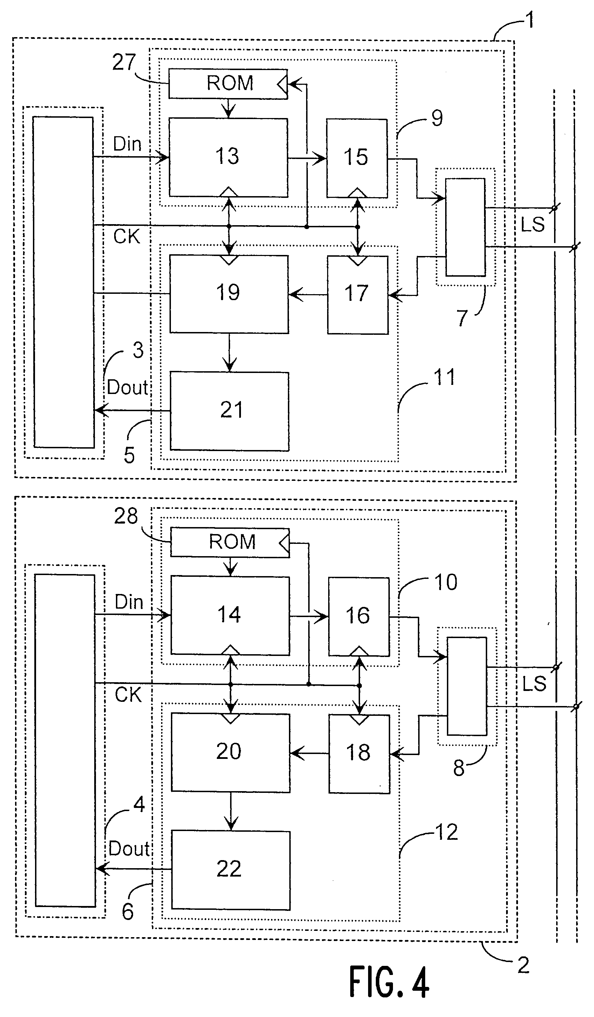

La figure 4 présente un schéma fonctionnel partiel d'un système de télécommunication selon une variante de l'invention, dans lequel chacun des dispositifs de communication (1, 2) comporte un modem (5, 6) dans lequel un signal porteur servant à la modulation est stocké sous forme échantillonnée dans une ROM (27, 28) dont la lecture est cadencée par le signal d'horloge commun CK. Le reste du modem demeure inchangé et fonctionne comme décrit précédemment. Il suffit au micro-contrôleur pilotant un tel modem de modifier la fréquence du signal d'horloge commun pour modifier la fréquence de communication. Le signal émis par le module de transmission (9, 10) via le module d'interface (7, 8) est identique au signal LS1 représenté sur la figure 6, si le signal échantillonné et stocké dans la ROM (27, 28) est identique au signal CS fourni par le micro-contrôleur dans le cas précédent.

Selon une autre variante d'un système de télécommunication conforme à l'invention, le signal porteur stocké sous forme échantillonnée dans la ROM (27, 28) incluse dans le modem (5, 6) contenu dans chacun des dispositifs de communication (1, 2) a des valeurs soumises à deux régimes transitoires, le premier, en début d'émission, au cours duquel le signal porteur a une amplitude qui croit progressivement jusqu'à une valeur nominale fixée, le second, en fin d'émission, au cours duquel l'amplitude du signal porteur décroît progressivement jusqu'à zéro.

L'évolution du signal LS2 émis par le module de transmission (9, 10) comportant une ROM (27, 28) contenant un tel signal porteur, via le module d'interface (7, 8), sur les lignes d'alimentation d'énergie peut être observée sur la figure 6. L'augmentation et la diminution progressive de l'amplitude lors des commutations génèrent moins de bruit sur les lignes d'alimentation d'énergie. Le modem selon cette variante de l'invention est moins polluant pour les autres informations qui pourraient être présentes sur les dites lignes.

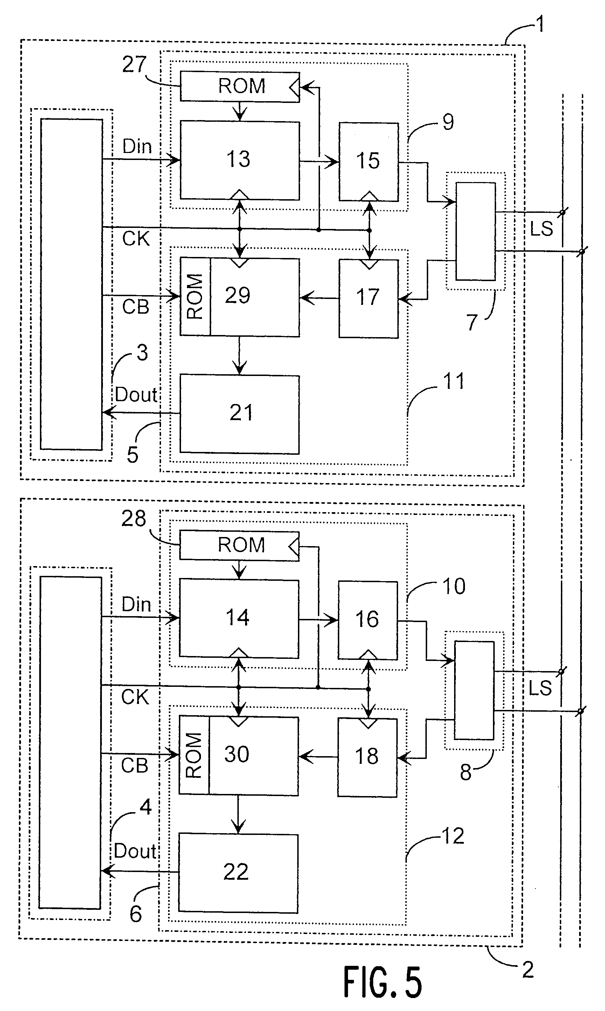

La figure 5 présente un schéma fonctionnel partiel d'un mode de réalisation avantageux d'un système de télécommunication selon l'une des deux variantes de l'invention décrites ci-dessus, dans lequel le filtre numérique (29, 30) présent dans chacun le modem contenu dans chacun des dispositifs de communication (1, 2) comporte une ROM dans laquelle différents jeux de coefficients correspondant à différents gabarits de filtrage sont stockés,ladite ROM étant adressée par le micro-contrôleur (3, 4) au moyen d'un bus de commande CB.

## Revendications

1. Système de télécommunication au travers de lignes d'alimentation d'énergie comportant des dispositifs dits de communication, chacun de ces dispositifs de communication comportant un micro-contrôleur et un modulateur/démodulateur appelé modem, ledit modem étant muni d'une part d'un module dit d'interface faisant la liaison avec les lignes d'alimentation d'énergie où circulent des informations, modem muni d'autre part d'un module de transmission comportant un modulateur numérique suivi d'un convertisseur numérique/analogique dont la sortie est connectée au module d'interface, modem muni enfin d'un module de réception comportant un convertisseur analogique/numérique dont l'entrée est connectée au module d'interface, suivi d'un démodulateur numérique, système caractérisé en ce que le module de réception présent dans le modem contenu dans chacun des dispositifs de communication comporte en outre un filtre numérique disposé entre le convertisseur analogique/numérique et le démodulateur numérique, ledit filtre numérique étant doté de moyens lui permettant de s'adapter à la fréquence de signaux présents sur les lignes d'alimentation d'énergie.

2. Système de télécommunication selon la revendication 1, caractérisé en ce que, au sein du modem contenu dans chacun des dispositifs de communication, le filtre numérique, ainsi que le modulateur numérique, le convertisseur numérique/analogique et le convertisseur analogique/numérique sont tous cadencés par un même signal d'horloge commun.

3. Système de télécommunication selon la revendication 2, caractérisé en ce que le modem contenu dans chacun des dispositifs de communication comporte une ROM dans laquelle est stocké sous forme échantillonnée un signal porteur servant à la modulation, ROM dont la lecture est cadencée par le signal d'horloge commun.

4. Système de télécommunication selon la revendication 3, caractérisé en ce que le signal porteur stocké sous forme échantillonnée dans la ROM incluse dans le modem contenu dans chacun des dispositifs de communication a des valeurs soumises à deux régimes transitoires, le premier, en début d'émission, au cours duquel le signal porteur a une amplitude qui croît progressivement jusqu'à une valeur nominale fixée, le second, en fin d'émission, au cours duquel l'amplitude du signal porteur décroît progressivement jusqu'à zéro.

5. Système de télécommunication selon l'une des revendications 1 à 4, caractérisé en ce que le filtre numérique présent dans le modem contenu dans chacun des dispositifs de communication comporte une autre ROM dans laquelle différents jeux de coefficients correspondant à différents gabarits de filtrage sont stockés, ladite ROM étant adressée par le micro-contrôleur au moyen d'un bus de commande.

6. Modulateur/démodulateur muni d'une part d'un module dit d'interface faisant la liaison avec des lignes d'alimentation d'énergie où circulent des informations, muni d'autre part d'un module de transmission comportant un modulateur numérique suivi d'un convertisseur numérique/analogique dont la sortie est connectée au module d'interface, et muni enfin d'un module de réception comportant un convertisseur analogique/numérique dont l'entrée est connectée au module d'interface, suivi d'un démodulateur numérique, caractérisé en ce que le module de réception comporte en outre un filtre numérique disposé entre le convertisseur analogique/numérique et le démodulateur numérique, ledit filtre numérique étant doté de moyens lui permettant de s'adapter à la fréquence de signaux présents sur les lignes d'alimentation d'énergie.

7. Modulateur/démodulateur selon la revendication 6, caractérisé en ce que le filtre numérique, ainsi que le modulateur numérique, le convertisseur numérique/analogique et le convertisseur analogique/numérique sont tous cadencés par un même signal d'horloge commun.

8. Modulateur/démodulateur selon la revendication 6, caractérisé en ce qu'un signal porteur servant à la modulation est stocké sous forme échantillonnée dans une ROM dont la lecture est cadencée par le signal d'horloge commun.

9. Modulateur/démodulateur selon la revendication 8, caractérisé en ce que le signal porteur stocké sous forme échantillonnée dans la ROM a des valeurs soumises à deux régimes transitoires, le premier, en début d'émission, au cours duquel le signal porteur a une amplitude qui croit progressivement jusqu'à une valeur nominale fixée, le second, en fin d'émission, au cours duquel l'amplitude du signal porteur décroît progressivement jusqu'à zéro.

10. Modulateur/démodulateur selon l'une des revendications 6 à 9, caractérisé en ce que le filtre numérique qu'il contient comporte une ROM dans laquelle différents jeux de coefficients correspondant à différents gabarits de filtrage sont stockés.
